(19) Europäisches Patentamt
European Patent Office
Office européen des brevets

(11) **EP 3 893 145 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **20168253.1**

(22) Anmeldetag: **06.04.2020**

(51) Internationale Patentklassifikation (IPC):
***G06K 9/00*** *(2022.01)*

(52) Gemeinsame Patentklassifikation (CPC):
**G06V 20/64; G06V 20/52;** G06V 2201/06

(54) **ABSICHERUNG EINER GEFAHRENSTELLE**

PROTECTION OF HAZARDOUS LOCATION

SÉCURISATION D'UN ENDROIT DANGEREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.10.2021 Patentblatt 2021/41**

(73) Patentinhaber: **SICK AG**
**79183 Waldkirch (DE)**

(72) Erfinder: **Hornung, Armin**
**79312 Emmendingen (DE)**

(56) Entgegenhaltungen:
**EP-A1- 3 200 122    EP-A1- 3 421 191**
**EP-A1- 3 572 971**

**Beschreibung**

Die Erfindung betrifft ein Verfahren zur Absicherung mindestens einer Gefahrenstelle nach dem Oberbegriff von Anspruch 1 sowie einen entsprechenden optoelektronischen Sensor zur sicheren Erkennung von Objekten.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstands- oder Tiefenwerte enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm ISO 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

In der sicherheitstechnischen Überwachung von Robotern besteht ein zunehmender Wunsch nach engerer Zusammenarbeit mit Personen (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Schutzfelder und Sicherheitsabstände möglichst klein und eventuell sogar situationsangepasst konfiguriert werden, natürlich unter der Vorgabe, dass die Sicherheit gewährleistet bleibt. Die Normen ISO 13854, ISO 13855, ISO 13857 befassen sich mit der Festlegung von Sicherheitsabständen.

Eine Bewertung von Objekten und Maschinen bezüglich Geschwindigkeit und gegenseitiger Entfernung wird in den genannten Robotornormen als "Speed and Separation Monitoring" bezeichnet. Herkömmliche sichere überwachende Sensoren, wie Laserscanner oder 3D-Kameras, unterstützen das aber nicht. Sie arbeiten weiterhin mit den üblichen Schutzfeldern, und sie liefern nur ein binäres Abschaltsignal, ob ein Schutzfeld verletzt ist oder nicht. Zwar ist die Sicherheit auf diese Weise gewährleistet, aber nicht besonders flexibel und auch häufig mit unnötigen Sicherheitszuschlägen und damit Einschränkungen der Verfügbarkeit, da die Schutzfelder für Worst-Case-Szenarien und nicht die tatsächliche aktuelle Situation konfiguriert sind.

Grundvoraussetzung für eine Absicherung ist die zuverlässige Erfassung sämtlicher Objekte im Umfeld einer Gefahrenquelle, die als Person oder Körperteil in Frage kommen. Das ist aber besonders bei 3D-Sensoren eine sehr hohe Anforderung. Problematisch sind beispielsweise je nach Technologie des 3D-Sensors Messfehler an Kanten, dunkle Objekte, metallische Bereiche oder konturlose Bereiche, die zu unsicheren Tiefenschätzungen führen können, sogenannten Fehlstellen, Lücken oder Löcher der Erfassung. Sie treten vermehrt bei höherem Fremdlichtpegel beispielsweise durch Beleuchtungen oder Sonnenlicht auf. Bei der Objekterkennung werden solche Lücken erkannt und mangels besseren Wissens vorsichtshalber als Vordergrund und damit wie ein Objekt behandelt.

Da der Sensor im abgeschatteten Bereich hinter einem Objekt nicht detektionsfähig ist, sollte die Auswertung mit dem projektiven Schatten hinter einem Objekt so umgehen, als gehöre der gesamte projektive Schatten zu dem Objekt. Das gilt entsprechend auch für Lücken, für die aber kein gültiger Abstandswert vorliegt. Die Konsequenz ist, dass Lücken als Objekte im Abstand Null, also unmittelbar vor dem Sensor, betrachtet und folglich die gesamten Sichtstrahlen der Lücke als Objekt behandelt werden. Das sorgt dann zwar für die erforderliche Sicherheit, ist aber eine ungünstige Überschätzung des Ausmaßes der Lücke durch Unterstellung des schlechtesten Falls.

Die EP 2 275 990 B1 befasst sich mit Lücken in der Tiefenkarte und wählt gerade den soeben beschriebenen konservativen Ansatz. Es erfolgt ein sicherheitsgerichteter Abschaltbefehl, wenn es Lücken oder zusammenhängende Pixelbereiche ohne Lücken gibt, die jeweils größer sind als das kleinste zu detektierende Objekt, wobei die Größe einer Lücke unter Annahme des schlechtesten Falls an den Rand projiziert wird. Dieser Rand im schlechtesten Fall liegt direkt vor dem Sensor.

Die EP 2 819 109 A1 offenbart einen 3D-Sensor, der Objekte ab einer Mindestgröße in einem Detektionsfeld erkennt. Um die projektive Geometrie einer Stereokamera korrekt zu berücksichtigen, werden Bereiche der Tiefenkarte mit passend gewählten Schablonen verglichen. Lücken werden dabei wie eine Objektstruktur direkt an der Empfangsoptik behandelt. Zudem erfolgt in EP 2 819 109 A1 die Objekterkennung in direkter Verknüpfung mit Detektionsfeldern. Für ein nicht auf Schutzfeldern basierendes Sicherheitskonzept ist das demnach ungeeignet.

Die US 7 925 077 B2 offenbart ein Verfahren zum Schätzen von Disparitäten für die Auswertung einer Stereokamera. Dabei werden diverse Filter vorgeschlagen, um die Schätzung zu verbessern und zu plausibilisieren. Es wird aber nicht diskutiert, wie mit dennoch verbleibenden Lücken umzugehen ist, erst recht nicht aus sicherheitstechnischer Perspektive.

Die EP 3 200 122 A1 offenbart einen 3D-Sensor mit sicherer Erkennung von Objekten, bei dem die Tiefenkarte mit einem feinen und einem groben Detektionsvermögen ausgewertet wird. Fein erfasste Objekte innerhalb einer Umgebung eines grob erfassten Objekts werden diesem zugeschlagen, isolierte fein erfasste Objekte als Störung ignoriert. Das ermöglicht zwar, nachgelagert bestimmte kleine Objekte noch als nicht sicherheitsrelevant auszufiltern. Dabei werden aber Lücken wie Objekte behandelt und müssen daher sicherheitshalber als direkt vor dem Sensor befindlich angenommen werden.

In der Literatur wird außerdem der Ansatz verfolgt, die Lücken in Tiefenkarten zu reparieren oder aufzufüllen. In der US 9 094 660 B2 etwa wird die Auflösung zunächst herunterskaliert, bis die verbleibenden Lücken oder deren Größe unter eine Schwelle fallen. Dann wird das niedriger aufgelöste Bild wieder auf die hohe Auflösung extrapoliert, und Lücken im ursprünglichen Bild werden mit Bilddaten des extrapolierten Bildes gefüllt. Derartige Reparaturen kommen aber in der Sicherheitstechnik kaum in Betracht, da Leben und Gesundheit von Personen nicht von Annahmen über die fehlende Bildinformation abhängig gemacht werden dürfen. Beispielsweise kann eine scheinbar aufzufüllende Lücke in Wahrheit einem Körperteil einer sehr dunkel gekleideten Person entsprechen, das in der Auswertung keinesfalls übersehen werden darf.

Ein Verfahren nach US 2015/0235351 A1 erzeugt aus einer Tiefenkarte zwei gefilterte Tiefenkarten und setzt daraus eine verbesserte Tiefenkarte zusammen. Die Filter können aber auch nur die vorhandene Information mittels Interpolation durch bestimmte Filterkerne anders verteilen. Ein solches Ausnutzen von Nachbarschaftsbeziehungen ist durchaus geeignet, das Erscheinungsbild einer Tiefenkarte deutlich zu verbessern.

Für den Personenschutz genügen solche Filter aber zumindest nicht allein, weil nicht garantieren ist, dass die sicherheitsgerichtete Reaktion wirklich nur unterbleibt, wenn keine Gefahr besteht.

Aus der EP 3 578 320 A1 ist bekannt, eine Gefahrenstelle zu konfigurieren und dann im Betrieb den kürzesten Abstand zu der Gefahrenstelle zu bestimmen, um gegebenenfalls eine sicherheitsgerichtete Reaktion auszulösen. In der EP 3 421 189 B1 oder der EP 3 421 191 A1 wird eine solche Bestimmung des kürzesten Abstands ebenfalls beschrieben und ein besonders effizienter Algorithmus dafür angegeben. Die Behandlung von Lücken verbessert das aber nicht.

In der EP 3 572 971 A1 werden Lücken nicht entsprechend einer Worst-Case-Annahme als Objekte in einer Höhe direkt vor der 3D-Kamera angenommen, sondern es wird eine geringere Höhe gewählt. Diese Höhe leitet sich aus den Vorschriften der oben genannten Sicherheitsnormen zum Schutz gegen Übergreifen oder Hinüberreichen ab. So lässt sich die Sicherheit trotz der geringeren Höhe gewährleisten. Dadurch werden kürzeste Abstände zu den fiktiven Objekten, die als Lücken behandelt werden, nicht mehr so stark unterschätzt, und das verbessert die Verfügbarkeit. Allerdings zeigt sich, dass je nach Objektposition im Sichtbereich der 3D-Kamera der kürzeste Abstand tatsächlich immer noch stark unterschätzt wird. Der Ansatz der EP 3 572 971 A1 mildert daher die Problematik, reicht aber in vielen Fällen nicht aus.

In der DGUV-Information FB HM-072 des Fachbereichs Holz und Metall der entsprechenden Berufsgenossenschaft, Ausgabe 04/2014: 3D-Schutzraum: Anordnung der BWS, Bestimmung des Sicherheitsabstands in Anlehnung an DIN ISO 13855, wird diskutiert, wie sich die Normvorschriften auf den dreidimensionalen Fall übertragen lassen. Besonderheiten bei der Berechnung des kürzesten Abstands oder die Behandlung von Lücken werden jedoch nicht angesprochen.

Es ist daher Aufgabe der Erfindung, die Bestimmung eines kürzesten Abstands für die Absicherung einer Gefahrenstelle zu verbessern.

Diese Aufgabe wird durch ein Verfahren zur Absicherung mindestens einer Gefahrenstelle nach Anspruch 1 sowie einen optoelektronischen Sensor zur sicheren Erkennung von Objekten nach Anspruch 12 gelöst. Die Gefahrenstelle ist eine Maschine oder ein Modell der Maschine, das angibt, in welchen Raumbereichen es zu einem Unfall kommen kann, wenn sich dort eine Person, ein Körperteil oder auch ein sonstiges unzulässiges Objekt aufhält. Es werden 3D-Bilddaten aus einem Überwachungsbereich zu der Gefahrenstelle erfasst. Häufig steht der Überwachungsbereich zu der Gefahrenstelle in der Weise in Beziehung, dass sich der Gefahrenbereich und insbesondere die Maschine zumindest teilweise darin befindet. Es ist aber auch denkbar, beispielsweise lediglich einen Zugangsbereich zu der eigentlichen Gefahr oder Maschine zu überwachen. Die 3D-Bilddaten werden mit einem 3D-Sensor aufgenommen, insbesondere einer 3D-Kamera, und können als Tiefenkarte, 3D-Punktewolke oder in beliebiger anderer Repräsentation vorliegen.

Die 3D-Bilddaten sind in beliebigen Koordinaten angegeben. Vereinfachend ist diese Beschreibung häufig stellvertretend von der Vorstellung einer Überwachung aus der Vogelperspektive geprägt. Eine vorzugsweise verwendete Dimension ist dann die Höhe über dem Boden, die in Kenntnis der Montagehöhe aus einer Distanz von dem aufnehmenden Sensor umrechenbar ist. Bei einer abweichenden Perspektive kann eine andere Fläche als der Boden den Bezug bilden, ohne dass dies im Weiteren sprachlich unterschieden wird.

Mit den 3D-Bilddaten erfolgt eine doppelte Objekterkennung mit unterschiedlichem Detektionsvermögen. Zwischen den erfassten Objekten und der Gefahrenstelle wird dann dynamisch ein kürzester Abstand bestimmt. Dabei bedeutet das beispielsweise in Millimetern angegebene Detektionsvermögen entsprechend dem üblichen Sprachgebrauch in der Sicherheitstechnik, dass Objekte ab einer durch das Detektionsvermögen festgelegten Mindestgröße sicher erfasst werden. Das erreichbare Detektionsvermögen hängt von der optischen Auflösung, aber auch von dem Auswertungsverfahren ab. Eine erste Objekterkennung verwendet ein feines Detektionsvermögen beispielsweise für Armschutz, eine zweite Objekterkennung ein grobes Detektionsvermögen beispielsweise für Körperschutz. Entsprechend den Begriffen fein und grob ist das erste Detektionsvermögen gröber oder, bei Angabe in einer Längeneinheit wie Millimetern, größer als das zweite Detektionsvermögen. Es sei angemerkt, dass natürlich eine Erfassung mit feinem Detektionsvermögen auch die großen Objekte der Erfassung mit grobem Detektionsvermögen ein zweites Mal aufdeckt. Große und kleine Objekte sind jedoch erfindungsgemäß nicht die relevante Kategorie, es werden grob erfasste und fein erfasste Objekte als Ergebnis der jeweiligen Objektdetektion unterschieden, ohne zu analysieren, inwieweit grob erfasste, große, fein erfasste und kleine Objekte miteinander übereinstimmen.

Die Erfindung geht von dem Grundgedanken aus, auch den kürzesten Abstand zweifach einmal als ersten kürzesten Abstand aus den fein erfassten und einmal als zweiten kürzesten Abstand aus den grob erfassten Objekten zu bestimmen. Das erscheint kontraintuitiv, da wie schon erwähnt die erste Objekterkennung keine Objekte der zweiten Objekterkennung übersieht. Allerdings können so unterschiedliche Sicherheitszuschläge in Abhängigkeit des Detektionsvermögens berücksichtigt werden. Für die weitere Auswertung wird als kürzester Abstand das Maximum aus den beiden kürzesten Abständen verwendet. Dabei ist der kürzeste Abstand nicht zwingend selbst die Ausgabe- oder Auswertungsgröße, es kann auch eine Größe sein, die damit zusammenhängt, beispielsweise die Position des Objekts, das einer Gefahrenstelle am nächsten ist.

Die Erfindung hat den Vorteil, dass eine möglichst geringe Unterschätzung des tatsächlichen kürzesten Abstands und damit eine höhere Verfügbarkeit erreicht wird. Je geringer die Unterschätzung, desto später muss eine überwachte Maschine des Gefahrenbereichs bei Unterschreitung des Sicherheitsabstandes in einen sicheren Zustand versetzt oder beim Annähern verlangsamt werden. Es muss betont werden, dass ein Überschätzen des kürzesten Abstands nicht zulässig ist, weil damit eine rechtzeitige sichere Reaktion nicht mehr garantiert ist und daher eine potentielle Gefährdungssituation entsteht. Das Ziel ist also, im Sinne einer verbesserten Verfügbarkeit so nahe an den kürzesten Abstand heranzukommen wie möglich. Das gilt aber nicht im Sinne üblicher Messfehlertoleranzen, sondern ist asymmetrisch: Ein Unterschätzen ist unkritisch, es wird dann lediglich im Maße der nicht gelungenen Optimierung die Verfügbarkeit, beeinträchtigt, während ein Überschätzen die nicht verhandelbare Sicherheit beträfe. Der relevante kürzeste Abstand ist im Übrigen nicht allein der physische Abstand zwischen Objekt und Gefahrenstelle, sondern ein kürzester Abstand unter Berücksichtigung der laut den relevanten Normen zu berücksichtigenden Sicherheitszuschläge.

Die genannten Vorteile zeigen sich in besonderem Maße, wenn die 3D-Bilddaten Lücken aufweisen, und die Erfindung schafft somit mehr Robustheit gegenüber Störeinflüssen wie Fremdlicht oder reflektierenden Objekten, die zu Lücken in der Tiefenkarte führen. Der Abstand zu diesen Lücken wird deutlich weniger unterschätzt und insbesondere scharf durch den auflösungsabhängigen Sicherheitszuschlag des gröberen Detektionsvermögens begrenzt.

Bis hierhin sowie später genannte sicherheitstechnische Größen, wie Sicherheitszuschlag, Detektionsvermögen, Hinübergreifen und dergleichen, und bereits die allgemeinen Begriffe sicher oder fehlersicher sind stets im Sinne sicherheitstechnischer Normen, insbesondere der ISO 13855 und der IEC 61496-4-3 beziehungsweise deren jeweils anzuwendender Entsprechung zu verstehen.

Das feine Detektionsvermögen ist bevorzugt für Armschutz und das grobe Detektionsvermögen für Körperschutz ausgelegt, insbesondere bei 40 mm oder 55 mm für Armschutz und 120 mm oder 200 mm für Körperschutz. Die Erfindung ist auf diese Zahlenwerte nicht beschränkt, sie sind aber besonders geeignet. Ein besserer Schutz als Armschutz ist mit heutigen Mitteln der Erfassung und Auswertung von 3D-Bilddaten kaum realistisch erreichbar, und zu einem feinen Detektionsvermögen für Armschutz ist ein grobes Detektionsvermögen für Körperschutz eine besonders vorteilhafte Ergänzung. Die Figurenbeschreibung gibt die erforderlichen Rechenvorschriften an, mit denen bei abweichenden Zahlenwerten für die Detektionsvermögen die Sicherheitsnormen erfüllt werden. Damit ist grundsätzlich bei entsprechender 3D-Technik beispielsweise eine Körpererkennung, eine Beinerkennung, eine Armerkennung, eine Handerkennung oder eine Fingererkennung mit beispielhaften Zahlenwerten 200 mm, 150 mm, 120 mm, 70 mm, 55 mm, 40 mm, 20 mm oder 14 mm möglich. Dabei können nicht alle Kombinationen gebildet werden, sondern nur solche, bei denen das feine Detektionsvermögen das kleinere Körperteil erkennt. Es kann also eine Ausführungsform geben, in der das grobe Detektionsvermögen eine Beinerkennung ermöglicht, während in einer anderen Ausführungsform erst das feine Detektionsvermögen Beine auflöst.

Zu dem zweiten kürzesten Abstand wird bevorzugt die Differenz eines auflösungsabhängigen Anteils eines Sicherheitszuschlags für beide Detektionsvermögen addiert. Der auflösungsbedingte Anteil C des Sicherheitszuschlags ist in den Sicherheitsnormen definiert und wird im Rahmen der Figurenbeschreibung genauer erläutert. Anschaulich gesprochen soll dadurch berücksichtigt werden, wieviel näher ein kleinerer Körperteil, der mit dem jeweiligen Detektionsvermögen nicht mehr sicher erfasst wird, der Gefahrenstelle im schlechtesten Fall bei einer Objekterfassung bereits gekommen sein kann, etwa der ausgestreckte Arm im Vergleich zur eine erfassten Körperposition. Die besagte Differenz wird in dieser Ausführungsform addiert, um in beiden Detektionsvermögen vergleichbare Verhältnisse zu schaffen. Als bevorzugte Zahlenwerte werden bei einem groben Detektionsvermögen von 200 mm eine Differenz von 462 mm oder 642 mm addiert, wenn das feine Detektionsvermögen 55 mm beziehungsweise 40 mm beträgt.

Vorzugsweise wird bei der Auswertung des kürzesten Abstands ein auflösungsabhängiger Anteil eines Sicherheitszuschlags berücksichtigt, der dem feinen Detektionsvermögen entspricht. An sich wäre es unzulässig, bei dem groben Detektionsvermögen den dafür zu kleinen auflösungsabhängigen Anteil des feinen Detektionsvermögens zu verwenden. Das wird jedoch möglich, wenn die Differenz wie im Vorabsatz bereits berücksichtigt war. Die Zahlenwerte lassen sich insbesondere nach der Formel 208 mm + 12 mm * (feines Detektionsvermögen - 40) bestimmen, und das ergibt beispielsweise 388 mm bei einem feinen Detektionsvermögen von 55 mm oder 208 mm bei einem feinen Detektionsvermögen von 40 mm.

Bevorzugt werden fein erfasste Objekte ignoriert, die nicht in einer Umgebung eines grob erfassten Objekts liegen oder damit verbunden sind. Es wird angenommen, dass solche isolierten fein erfassten Objekte Bildfehler sind. Dem liegt die Überlegung zugrunde, dass relevante fein erfasste Objekte kleinere Körperteile sind, beispielsweise ein Arm, und diese nicht isoliert vorkommen können, sondern nur im Zusammenhang mit dem zugehörigen größeren Körperteil, beispielsweise dem Rumpf oder Körper selbst. Mit dieser Filterung können Störungen erkannt und ausgeschlossen werden, so dass unnötige Unterschätzungen des kürzesten Abstands vermieden werden und die Verfügbarkeit sich erhöht. Spiegelbildlich zum Ausblenden isolierter fein erfasster Objekte können Kombinationsobjekte (Connected Components) aus grob erfassten Objekten und in deren Umgebung befindlichen fein erfassten Objekten gebildet werden, solche nicht isolierten fein erfassten Objekte demnach mit grob erfassten Objekten verbunden werden. Die Umgebung kann durch einen Suchradius oder eine Maske definiert werden, wobei sich die Ausdehnung vorzugsweise an den auflösungsabhängigen Anteil eines Sicherheitszuschlags anlehnt, da dieser letztlich auch auf die maximale Größe des jeweiligen Körperteils zurückgeht, wie beispielsweise eines Armes. Für weitere Details wird auf die einleitend schon genannte EP 3 200 122 A1 verwiesen.

Lücken in den 3D-Bilddaten, d.h. sicherheitsrelevante Teilbereiche des Überwachungsbereichs, in denen keine zuverlässigen 3D-Bilddaten bestimmt werden können, werden bevorzugt als Objekt auf einer vorgegebenen Höhe behandelt, die einer Höhe zum Absichern gegen Hinüberreichen entspricht. Der Begriff Lücken steht stellvertretend für die ebenfalls verwendeten Begriffe Gaps, Fehlstellen oder Löcher. Lücken werden als Vordergrund und damit Objekt behandelt, es wird also vorsichtshalber angenommen, dass jede Lücke ein Objekt verbirgt. In einer Tiefenkarte beispielsweise werden die Pixel in der Lücke auf die vorgegebene Höhe gesetzt, bei einer 3D-Punktewolke werden über die Ausdehnung der Lücke Messpunkte in der vorgegebenen Höhe ergänzt. Lücken müssen nur in sicherheitsrelevanten Teilbereichen des Überwachungsbereichs beachtet werden, möglicherweise ist der eigentlich erfassbare Überwachungsbereich größer, aber darin ein Arbeitsbereich konfiguriert und durch diese Begrenzung festgelegt, dass außerhalb keine Sicherheitsüberwachung erfolgen muss.

Herkömmlich werden Lücken auf einen Distanzwert Null oder eine Maximalhöhe direkt vor dem die 3D-Bilddaten erfassenden Sensor gesetzt. Das ist auch in Kombination mit der Erfindung denkbar, aber die hier beschriebene Höhe ist vorteilhafter, da der kürzeste Abstand weniger überschätzt wird. Wie in der einleitend genannten EP 3 572 971 A1 diskutiert, auf die ergänzend verwiesen wird, lässt sich Sicherheit bereits gewährleisten, wenn statt der Maximalhöhe eine Höhe gewählt wird, bei der ein Hinüberreichen sicher ausgeschlossen ist. Hinüberreichen oder Reach Over, auch Übergreifen genannt, ist ein Fachbegriff der Sicherheitsnormen und bedeutet ganz anschaulich und dem Begriff entsprechend, dass jemand versucht, über die Schutzeinrichtung hinüberzugreifen oder hinüberzureichen. Das wird auch als senkrechter Eingriff bezeichnet, weil nur der übergreifende Arm detektiert werden könnte, ohne den Kontakt zum Boden wie bei einer in einen abgesicherten Bereich hineinlaufenden Person. Die erforderliche Höhe zum Absichern gegen Hinüberreichen kann beispielsweise mit Tabelle 1 "Hinüberreichen über das senkrechte Schutzfeld einer berührungslos wirkenden Schutzeinrichtung" aus der Sicherheitsnorm EN 13855 bestimmt werden. Dazu wird, etwas verkürzt ausgedrückt, die Höhe so gewählt, dass kein zusätzlicher Zuschlag $C_{RO}$ zur Absicherung gegen Hinüberreichen berücksichtigt werden muss, weil dies bereits durch die Summe aus auflösungsbedingtem Anteil und Detektionsvermögen C+d ausreichend berücksichtigt ist.

Vorzugsweise wird bei der Erfassung der 3D-Bilddaten ein Zuverlässigkeitsmaß ermittelt, und sicherheitsrelevante Teilbereiche, in denen das Zuverlässigkeitsmaß eine Zuverlässigkeitsschwelle unterschreitet, werden als Lücken und damit Objekte in der vorgegebenen Höhe behandelt. Das ist also ein mögliches Kriterium zur Beurteilung, wo die 3D-Bilddaten Lücken aufweisen. Beispielsweise wird bei einer Disparitätsschätzung einer Stereokamera zugleich ein Gütemaß für die jeweilige Korrelation und damit den resultierenden Abstandswert erzeugt. Lücken sind dann nicht nur Teilbereiche des Überwachungsbereichs, in denen gar keine Abstände erfasst werden konnten, sondern auch solche, in denen die Schätzung nicht als ausreichend zuverlässig angesehen wird. Die Lücken, die ja als fiktive Objekte angenommen werden, durchlaufen vorzugsweise ebenso wie tatsächlich erfasste Objekte eine Erkennung, ob es sich auch um sicherheitsrelevante Objekte handelt. Beispielsweise können kleine Lücken und Objekte eliminiert werden, es kann ein Körpermodell zum Filtern genutzt werden, oder es werden wie in EP 3 200 122 A1 fein erfasste Objekte einem benachbarten grob erfassten Objekt zugeschlagen beziehungsweise isolierte fein erfasste Objekte ignoriert.

Lücken werden bevorzugt bei der ersten Objekterkennung als Objekte in einer ersten Höhe und bei der zweiten Objekterkennung in einer zweiten Höhe behandelt, wobei die erste Höhe größer ist als die zweite Höhe. Das ist möglich, weil sich die Höhen aus einer Höhe zum Absichern gegen Hinüberreichen ableiten und letztere Höhe vom Detektionsvermögen abhängt. Anschaulich kann ein Arm höher übergreifen als der Rumpf, d.h. ein Hinüberlehnen oder -beugen. Es lässt sich so eine geringere Höhe für das grobe Detektionsvermögen verwenden, und das führt letztlich zu einer noch kleineren Überschätzung des kürzesten Abstands. Eine allgemeine Obergrenze für die Höhe kann mit 2,40 m entsprechend einer großzügig geschätzten maximalen Körpergröße angegeben werden. Es ist noch denkbar, dass ein großer Mensch seine Fingerspitzen bis in diese Höhe ausstreckt, aber nicht in dieser Höhe unentdeckt in die Gefahrenstelle übergreift. Zunehmend schärfere bevorzugte Zahlenwerte sind für die erste Höhe ein Bereich von [1,80 m; 2,40 m], [1,80 m; 2,20 m] oder ein Wert von 2,00 m mit gegebenenfalls wenigen Zentimetern Toleranz und für die zweite Höhe ein Bereich [1,00 m; 1,60 m], [1,20 m; 1,40 m] oder ein Wert von 1,20 m erneut mit gewisser Toleranz.

Die Objekterkennung und/oder die Bestimmung von erstem kürzestem Abstand und zweitem kürzestem Abstand wird bevorzugt zweikanalig, insbesondere auf diversitär-redundanten Kanälen, auf dem einen Kanal für das feine Detektionsvermögen und auf dem anderen Kanal für das grobe Detektionsvermögen durchgeführt. Eine zweikanalige Auswertung mit anschließender gegenseitiger Prüfung der Ergebnisse ist eine Möglichkeit für eine sichere Auswertung. Die beiden Kanäle können für eine redundante Auswertung gleichartig oder für eine diversitär-redundante Auswertung mit unterschiedlicher Hardware und/oder Software aufgebaut sein.

Die Zuständigkeit der Kanäle für ein Detektionsvermögen wechselt vorzugsweise. Dadurch werden Fehler der Auswertung noch verlässlicher aufgedeckt. Ein Wechsel findet beispielsweise nach jeder Berechnung, zyklisch oder auf Anforderung statt. In manchen Implementierungen wird die Objekterkennung ohnehin zwei- oder mehrfach durchgeführt, ehe eine Entscheidung über eine sicherheitsgerichtete Reaktion getroffen wird. Dann kann der Wechsel bereits innerhalb dieser Wiederholungen stattfinden.

Vorzugsweise wird aufgrund des kürzesten Abstands entschieden, ob eine sicherheitsgerichtete Reaktion eingeleitet wird. Das kann je nach Situation ein Verlangsamen, Ausweichen oder Anhalten einer Maschine oder sonstigen Gefahrenquelle sein, die durch die Gefahrenstelle repräsentiert ist, aber auch beispielsweise das Schließen oder Verriegeln einer Sicherheitstür.

Vorzugsweise werden mehrere kürzeste Abstände zu mehreren Gefahrenstellen bestimmt, und es wird ein kürzester Abstand als Minimum der mehreren kürzesten Abstände ermittelt. Dadurch können beispielsweise mehrere Maschinen oder mehrere gefährliche Abschnitte einer Maschine abgesichert werden. Der kürzeste Abstand über alle Gefahrenstellen lässt sich sehr einfach als Minimum auffinden und auswerten. Alternativ kann aber auch ein jeweiliger kürzester Abstand zu den nächsten i Gefahrenstellen oder sämtlichen Gefahrenstellen bestimmt und mit einem komplexeren Verfahren als der bloßen Berücksichtigung des global kürzesten Abstands über die sicherheitsgerichtete Reaktion entschieden werden, etwa wenn die Intensität der Gefährdung bei den Gefahrenstellen unterschiedlich ist.

Ein erfindungsgemäßer optoelektronischer Sensor zur sicheren Erkennung von Objekten einer durch ein Detektionsvermögen vorgegebenen Mindestgröße in einem Überwachungsbereich weist mindestens einen Bildsensor zum Erfassen von 3D-Bilddaten des Überwachungsbereichs und eine Steuer- und Auswertungseinheit auf, die für eine Ausführungsform des erfindungsgemäßen Verfahrens ausgebildet ist. Der Sensor ist vorzugsweise sicher, also für eine sicherheitstechnische Anwendung ausgelegt, und erfüllt dafür die einleitend genannten oder entsprechende Normen, um eine Gefahrenstelle abzusichern.

Bevorzugt handelt es sich um eine 3D-Kamera, die zunächst jede bekannte Technik verwenden kann, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Auch ein Laserscanner ist ein 3D-Sensor, denn er erzeugt 3D-Punktwolken, die bei einem klassischen Laserscanner auf eine Abtastebene beschränkt sind. Durch in Elevation bewegte Abtastung oder mehrere in Elevation versetzte Abtaststrahlen entfällt diese Beschränkung bei einem Laserscanner.

Der optoelektronische Sensor weist bevorzugt einen sicheren Ausgang auf, an dem der kürzeste Abstand zu mindestens einer Gefahrenstelle und/oder die Position des Objekts in kürzestem Abstand zu mindestens einer Gefahrenstelle ausgegeben wird. Herkömmlich wird über eine solche Ausgabeschnittstelle nur ein binäres Signal ausgegeben, ob eine Schutzfeldverletzung vorliegt (OSSD, Output Signal Switching Device). Nach dieser bevorzugten Ausführungsform werden nicht mehr durch den Sensor selbst binäre Absicherungssignale erzeugt und ausgegeben. Stattdessen wird die dafür erforderliche Information sicher, sehr kompakt und leicht zugänglich bereitgestellt, und die eigentliche Sicherheitsbewertung erfolgt nachgelagert. Diese Information tritt an die Stelle des bisher üblichen binären Absicherungssignals an dem folglich nicht mehr als OSSD ausgestalteten sicheren Ausgang. Ein angeschlossenes System, etwa eine Sicherheitssteuerung, die übergeordnete Steuerung einer Roboterzelle oder auch die Steuerung der Maschine selbst, von der sich die Gefahrenstelle ableitet, kann anhand des kürzesten Abstands beziehungsweise der kürzesten Abstände feststellen, ob eine Gefahr besteht, und übernimmt die eigentliche Absicherungsfunktion. Anstelle eines kürzesten Abstands können Werte ausgegeben werden, die ein gleichwertige Information enthalten, insbesondere die Position des nächsten Objekts zu einer Gefahrenstelle, die sich davon nur durch elementare geometrische Berechnungen unterscheidet.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      eine schematische dreidimensionale Darstellung einer 3D-Kamera und ihres Überwachungsbereichs;

Fig. 2      eine schematische Seitenansicht einer beispielhaften Erfassungssituation einer Person in der Nähe einer Gefahrenstelle zur Erläuterung der Berücksichtigung von Lücken auf einer Höhe entsprechend eine Absicherung gegen Hinübergreifen;

Fig. 3      eine schematische Seitenansicht ähnlich Figur 2, jedoch mit höherer Gefahrenstelle;

Fig. 4      eine schematische Darstellung des Sichtbereichs einer 3D-Kamera in Seitenansicht zur Illustration der Überschätzung von kürzesten Abständen bei Behandlung von Lücken gemäß Figur 2 und 3;

Fig. 5      eine Darstellung ähnlich Figur 4 für eine andere beispielhafte Erfassungssituation und Lücke;

Fig. 6      eine Skizze zur Erläuterung von auflösungsabhängigen Anteilen eines Sicherheitszuschlags für verschiedene Detektionsvermögen; und

Fig. 7      eine Darstellung ähnlich Figur 4, nun jedoch mit deutlich geringerer Überschätzung von kürzesten Abständen durch doppelte Objekterkennung und Abstandsbestimmung bei unterschiedlichem Detektionsvermögen.

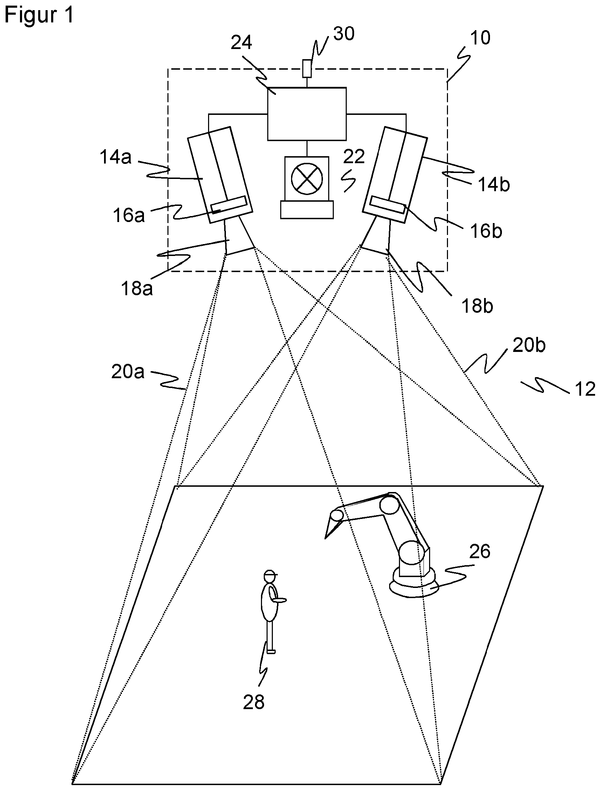

Figur 1 zeigt in einer schematischen dreidimensionalen Darstellung den allgemeinen Aufbau einer Stereokamera 10 zur Aufnahme einer Tiefenkarte. Die Stereokamera 10 ist nur ein Beispiel für einen erfindungsgemäßen Sensor, an dem die Erfassung von 3D-Bilddaten erläutert wird. Ebenso denkbar wären andere 3D-Kameras mit Erfassungsprinzipien wie Korrelation von Bild und projizierten Beleuchtungsmustern oder Bestimmung der Lichtlaufzeit sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden. Der effektive Sichtbereich für ein Stereoverfahren ist auf den Überlappungsbereich begrenzt. Für einen größeren Sichtbereich können mehrere Stereokameras nebeneinander oder aus sonstiger Perspektive kombiniert werden, wobei auch gemischte Systeme mit 3D-Sensoren unterschiedlicher Technologie vorstellbar sind.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Steuer- und Auswertungseinheit 24 prüft, wo sich ein Objekt 28, dargestellt als Person, in Bezug auf die Maschine 26 befindet. Über eine sichere Schnittstelle 30 wird ein kürzester Abstand eines Objekts 28 zu der Maschine 26 ausgegeben, entweder direkt an die Maschine 26 oder an eine Zwischenstation wie eine sichere Steuerung. Der kürzeste Abstand darf nicht mit dem Abstand von der Stereokamera 10 zu Objektpunkten in dem Raumbereich 12 verwechselt werden, also den Tiefenwerten. Die Stereokamera 10 ist vorzugsweise fehlersicher im Sinne von Sicherheitsnormen wie den einleitend genannten ausgelegt. Anstelle des kürzesten Abstands kann eine Größe ausgegeben werden, aus der sich der kürzeste Abstand leicht ermitteln lässt, etwa die Objektposition des der Maschine 26 nächstliegenden Objekts.

Die an die sichere Schnittstelle 30 angeschlossene Steuerung, sei es eine übergeordnete Steuerung oder diejenige der Maschine 26, wertet den kürzesten Abstand zur Erfüllung einer Sicherheitsfunktion aus, zum Beispiel eines Speed-and-Separation Monitoring nach ISO/TS 15066, und vergleicht dazu den kürzesten Abstand mit einem erforderlichen Sicherheitsabstand etwa nach ISO 13855. Im Gefährdungsfall wird eine sicherheitsgerichtete Reaktion eingeleitet, um beispielsweise die Maschine 26 anzuhalten, abzubremsen oder ausweichen zu lassen. Ob dies erforderlich ist, kann neben dem kürzesten Abstand von weiteren Bedingungen, wie den Geschwindigkeiten oder Bewegungsrichtungen oder der Beschaffenheit von Objekt 28 und Maschinenbereich 26 der drohenden Kollision abhängen.

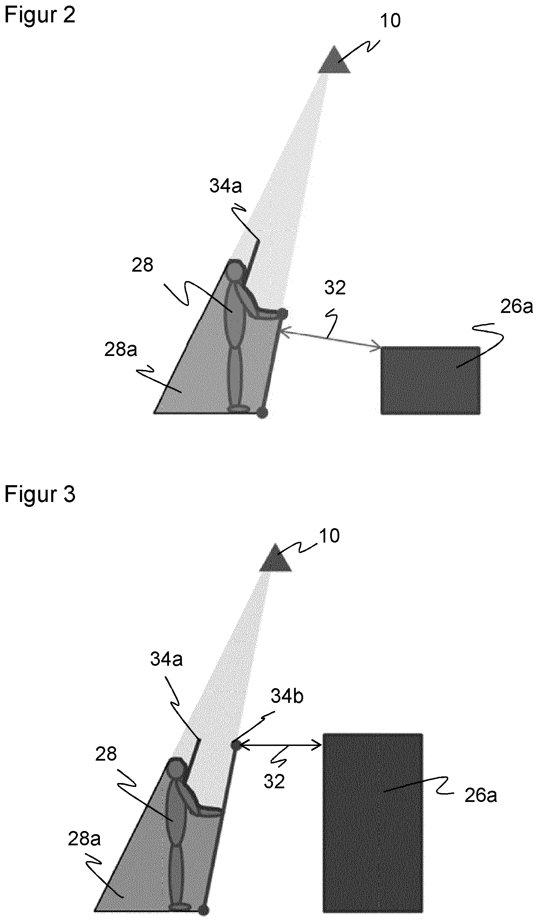

Figur 2 zeigt eine schematische Seitenansicht einer Überwachungssituation. Die Maschine 26 wird hier vorteilhaft als Gefahrenstelle 26a modelliert. Das ist ein Raumbereich, in dem die Maschine 26 in einem jeweiligen Zeitabschnitt Arbeitsbewegungen ausführt oder die auf andere Weise in Zusammenhang mit Gefährdungen durch die Maschine 26 steht. Die Gefahrenstelle 26a kann die Maschine 26 mit etwas Abstand umgeben, um den Arbeitsbewegungen ausreichend Spiel zu lassen. Außerdem ist es für die Berechnungen vorteilhaft, geometrisch einfache Gefahrenstellen 26a wie Quader oder Kugeln zu definieren, wofür dann gewisse Leerräume in Kauf genommen werden. Mehrere Gefahrenstellen 26a umgeben bei Bedarf mehrere Maschinen 26 und/oder mehrere bewegliche Teilabschnitte einer Maschine 26. Gefahrenstellen 26a können starr sein und sämtlich denkbaren Arbeitsbewegungen umfassen. Alternativ sind jeweils Gefahrenstellen 26a für Teilabschnitte der Arbeitsbewegung definiert, die in einer dem Prozess entsprechenden Abfolge benutzt werden und die kleiner und besser angepasst sind.

Die Gefahrenstelle 26a selbst wird vorzugsweise als frei von zu erfassenden Objekten 28 angesehen, oder vielmehr als durch die Maschine 26 blockiert. Tatsächlich wäre je nach Hüllkörper, der die Maschine 26 als Gefahrenstelle 26a modelliert, darin durchaus Raum für Objekte 28. Auch bildet die Maschine 26 natürlich selbst ein Objekt 28, das zunächst von der Stereokamera 10 erfasst wird. All das wird aber vorzugsweise absichtlich in der Auswertung ignoriert und die Gefahrenstelle 26a als leerer, von Objekten 28 freier Block modelliert, um die Überwachung und die Bestimmung kürzester Abstände zu vereinfachen, denn die Dynamik der Maschine 26 innerhalb der Gefahrenstelle 26a spielt so keine Rolle. Sicherheitstechnisch ist dies unproblematisch, denn jedes Objekt 28 wird rechtzeitig erkannt, wenn es sich der Gefahrenstelle 26a nähert.

Die Steuer- und Auswertungseinheit 24 berechnet wie zu Figur 1 erwähnt kontinuierlich den kürzesten Abstand zwischen Gefahrenstelle 26a und Objekt 28, wobei vorzugsweise jeweilige projektive Schatten einbezogen sind. Dazu wird das Minimum der Abstände zwischen den Punkten in einem durch das Objekt 28 abgeschatteten Bereich 28a und den Punkten der Gefahrenstelle 26a um die Maschine 26 gegebenenfalls auch samt projektivem Schatten bestimmt. Der resultierende kürzeste Abstand 32 ist in Figur 2 durch einen Pfeil eingezeichnet, welcher den nächsten Punkt des abgeschatteten Bereichs 28a mit dem nächsten Punkt der Gefahrenstelle 26a verbindet. Dieser kürzeste Abstand wird zyklisch oder azyklisch an der sicheren Schnittstelle 30 bereitgestellt, alternativ eine gleichwertige Ausgabegröße wie ein der Gefahrenstelle 26a nächstliegendes Objekt vorzugsweise einschließlich dessen abstandsbestimmenden nächsten Objektpunkts. Typische Ausgaberaten sind mehrmals pro Sekunde, es ist aber auch eine seltenere Aktualisierung denkbar, je nach geforderter und möglicher Ansprechzeit der Stereokamera 10. Eine an der sicheren Schnittstelle 30 angeschlossene übergeordnete Steuerung, insbesondere diejenige der Maschine 26, plant dann erforderlichenfalls abhängig von dem kürzesten Abstand den nächsten Arbeitsschritt neu, vermindert die Arbeitsgeschwindigkeit oder hält notfalls die Maschine 26 sicherheitsgerichtet an, so dass durchgehend der erforderliche Sicherheitsabstand zwischen Mensch und Maschine gewahrt bleibt. Alternativ erfolgt die Sicherheitsbewertung der kürzesten Abstände in der Steuer- und Auswertungseinheit 24.

Bei der Objekterkennung und anschließenden Bestimmung des kürzesten Abstands werden vorzugsweise isolierte kleine Objekte ignoriert beziehungsweise gemäß einem einfachen Körpermodell kleine Objekte in einer Umgebung eines großen Objekts dem großen Objekt zugeschlagen. Beispielsweise werden Objekte einmal in Körperauflösung und einmal in Armauflösung bei einem Detektionsvermögen von 200 mm beziehungsweise 55 mm erfasst, und es bleiben nur Armdetektionen bestehen, mit Körperdetektionen verbunden sind. Ein solches Verfahren wird detailliert in der einleitend genannten EP 3 200 122 A1 beschrieben, auf die ergänzend verwiesen wird.

Zur Erfüllung der Sensorfunktion, also insbesondere der Berechnung und Ausgabe des kürzesten Abstands zu einer konfigurierten Gefahrenstelle 26a, muss zu jeder gültigen Objektdetektion ein Abstands-beziehungsweise Tiefenwert von der Stereokamera 10 bestimmt werden. Eine mögliche Repräsentation ist eine sogenannte Detektionstiefenkarte, deren Pixel einen Abstandswert enthalten, wo immer an der jeweiligen lateralen Position ein gültiges Objekt 28 erkannt wurde. Gültig bedeutet in diesem Zusammenhang beispielsweise, dass das Objekt 28 auch nach Filterungen mit einer Mindestgröße, einem Körpermodell, einem Zusammenhang mit einem grob erfassten Objekt wie in EP 3 200 122 A1 oder dergleichen noch als relevant betrachtet wird und in einem sicherheitsrelevanten Raumbereich liegt. Bereiche, in denen kein gültiges Objekt 28 erkannt wurde, sind in der Detektionstiefenkarte leer. Problematische Bereiche, die alternativ auch als Fehlstellen, Löcher oder Lücken bezeichnet werden, müssen aber in der Detektionstiefenkarte berücksichtigt werden, und zwar als (fiktive) Objekte in einem vorgegebenen Abstand zu der Stereokamera 10. Kleine isolierte Lücken sind dabei ebenso wie kleine isolierte Objekte vorzugsweise schon herausgefiltert.

Herkömmlich wird den Pixeln in einer Lücke ein Abstand Null unmittelbar vor der Stereokamera 10 zugewiesen. Das bedeutet aber, dass der gesamte Sichtstrahl bis zum Boden für die Berechnung kürzester Abstände herangezogen werden kann. Die Verfügbarkeit wird folglich verbessert, wenn ein möglichst großer Abstand zu der Stereokamera 10 vorgegeben wird, anders ausgedrückt bei der vorteilhaft dargestellten Perspektive von oben eine möglichst geringe Höhe über einer Grundfläche. Um dennoch die Sicherheit zu gewährleisten, wird vorzugsweise zugleich eine Höhe gewählt, die ausreichend ist, um ein Hinüberreichen oder Übergreifen (Reach Over) beispielsweise nach ISO 13855:2010 zu verhindern. Dann ergeben sich kürzere Sichtstrahlen, wie in Figur 2 für eine beispielhafte Lücke 34a gezeigt.

Figur 3 illustriert, wie durch die Betrachtung von Lücken 34a-b in einer Höhe analog dem sicheren Schutz gegen Hinüberreichen, hier beispielhaft bei 2,0 m über dem Boden, die kürzesten Abstände weniger überschätzt werden und damit die Verfügbarkeit verbessert wird. Dieser Schritt entsprechend EP 3 572 971 A1, auf die ergänzend verwiesen wird, ist vorteilhaft, aber die Erfindung ist darauf nicht beschränkt, sondern kann beispielsweise Lücken 34a-b alternativ auch ganz konservativ auf eine Maximalhöhe direkt bei der Stereokamera 10 setzen. In Figur 3 ist die Gefahrenstelle 26a höher, und gerade in einem solchen Fall kann die Höhe, die Lücken 34a zugewiesen wird, für die Berechnung des kürzesten Abstands entscheidend werden.

In Figur 2 besteht der kürzeste Abstand 32 zu einem Punkt im abgeschatteten Bereich 28a. In Figur 3 ist zur Illustration eine weitere Lücke 34b an einem der Gefahrenstelle 26a zugewandten Rand hinzugefügt, und der kürzeste Abstand 32 besteht hier zu der Lücke 34b beziehungsweise deren Sichtstrahl. Würde man der Lücke 34b eine größere Höhe zuweisen, so würde ein noch geringerer kürzester Abstand 32 resultieren, was einer höheren Gefährdung entspricht und die Verfügbarkeit beeinträchtigt. Es ist zugleich zu erkennen, dass die niedrigere Gefahrenstelle 26b in Figur 2 auch bei Hinzufügen einer weiteren Lücke 34b am Rand weiterhin den kürzesten Abstand 32 zu dem abgeschatteten Bereich aufwiese. Das unterstreicht nochmals, dass die einer Lücke 34a-b zugewiesene Höhe vor allem bei hohen Gefahrenstellen 26a Auswirkungen auf die Verfügbarkeit hat.

Es lässt sich anschaulich mit einem Körpermodell begründen, dass es möglich sein muss, unter Wahrung der Sicherheit einer Lücke 34a-b eine Höhe zuzuweisen, die niedriger ist als bei einem Abstand Null zu der Stereokamera 10. Das Detektionsvermögen der Stereokamera 10 bestimmt, welche Objekte 28 als sicherheitsrelevant noch zuverlässig erkannt werden müssen. Beispielsweise beträgt das Detektionsvermögen für Ellenbogenschutz d=55 mm und für Handgelenkschutz d=40 mm. Ein Körpermodell gibt die maximale Größe und maximale Länge der Extremitäten vor, und der Mensch steht immer auf einer definierten Grundfläche. Daraus ergibt sich eine maximale Höhe über der Grundfläche, in der die entsprechenden Körperteile noch erwartet werden oder gar übergreifen können und deshalb überhaupt erkannt werden müssen. Es genügt, wenn der Abstandswert für Lücken 34a-b auf diese Höhe gesetzt wird.

Die erforderliche Höhe lässt sich aber auch aus den Sicherheitsnormen herleiten beziehungsweise stichhaltig damit begründen. Dabei wird hier die ISO 13855 und die IEC/TS 61496-4-3 herangezogen. Entsprechende Regelungen sind auch in einer alternativ gültigen heutigen oder zukünftigen Norm zu erwarten.

Danach gilt für den minimalen Sicherheitsabstand S0 zur Gefahrenstelle

$$S_0 = (K \times T) + C + C_{tz} + d$$

mit den folgenden Sicherheitszuschlägen:

C Zuschlag in Abhängigkeit vom Detektionsvermögen, $C = f(d)$,
$C_{tz}$ Zuschlag für Systemtoleranzen,
d Detektionsvermögen und
K x T Term der Bewegung.

Die Systemtoleranzen $C_{tz}$ sollen an dieser Stelle ignoriert und als Beispiel ein Detektionsvermögen von d=55 mm angenommen werden. Nach einer Schätzung basierend auf Daten von B. Flügel, H. Greil, K. Sommer, Anthropologischer Atlas, Verlag Tribüne Berlin 1986, ISBN 3-7303-0042-3 wird bei einem Detektionsvermögen 40 mm < d ≤ 55 mm der Zuschlag C = 12 d - 272 mm, somit C = 388 mm für d = 55 mm.

Im Sinne der Norm sollte nun sichergestellt sein, dass $C_{RO}$ < C + d, wobei $C_{RO}$ den Zuschlag für Schutz gegen Hinüberreichen oder Übergreifen bezeichnet (RO, Reach Over). Diese Bedingung ergibt sich daraus, dass $S_{RO}$ < $S_0$ gelten sollte, mit $S_{RO}$=K x T + $C_{RO}$.

Tabelle 1 der ISO 13855:2010 listet verschiedene Werte für $C_{RO}$ zu Kombinationen der Höhe a der Gefahrenstelle und der Höhe b des Detektionsfeldes auf. Um Gefahrenstellen beliebiger Höhe überwachen zu können, wird hier das Maximum der $C_{RO}$ für alle a bei gegebenem b betrachtet. Alternativ könnte auch eine Tabelle oder Rechenvorschrift hinterlegt werden, um die Abhängigkeit von a für die konkret konfigurierten Gefahrenstellen 26a zu berücksichtigen.

Bei b= 2 000 mm ist das maximale $C_{RO}$ = 400 mm. Damit ist C + d = 443 mm > $C_{RO}$ und somit eine Höhe von 2 000 mm für ein Detektionsvermögen d = 55 mm sicher.

Die maximale Höhe des Detektionsbereiches bedeutet, dass darüber keine Objekte 28 detektiert werden müssen beziehungsweise nur deren Verdeckung 28a innerhalb des Detektionsbereiches relevant ist. Daraus lässt sich aber schließen, dass Objekte 28 mit unbekannter Entfernung, also Lücken 34a-b, samt ihrer Verdeckung auch nur bis zu maximal dieser Höhe betrachtet werden müssen. Die aus der Norm abgeleitete Höhe stellt sicher, dass die Gefahrenstelle 26a nicht mehr erreicht werden kann, wenn eine Detektion des Objektes 28 bis zu dieser Höhe oder ersatzweise eine Projektion einer Lücke 34a-b auf diese Höhe vorgenommen wird.

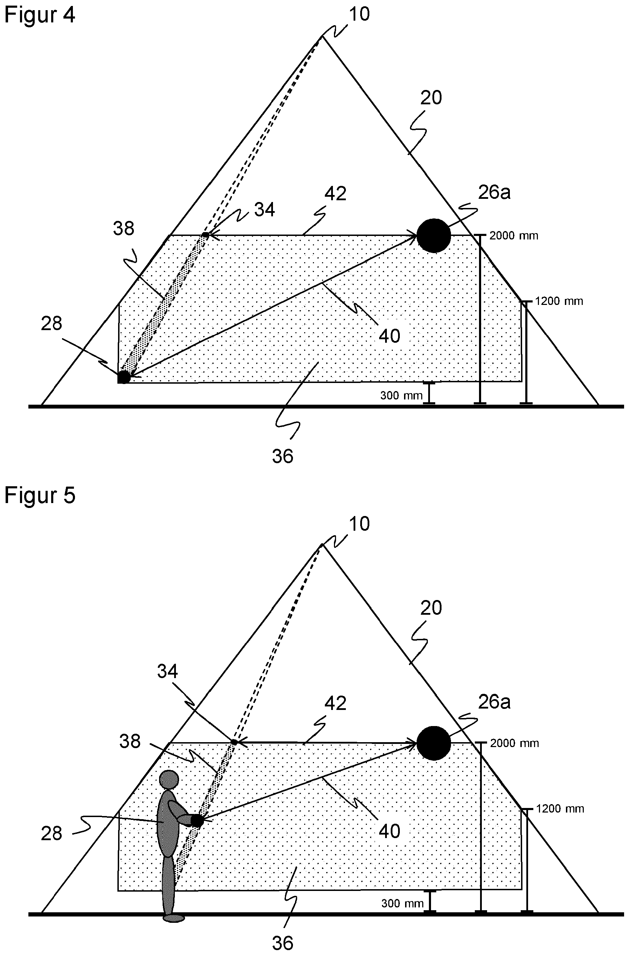

Figur 4 ist eine schematische Darstellung des Sichtbereichs 20 der Stereokamera 10 zur Illustration der Überschätzung von kürzesten Abständen trotz Verschieben von Lücken 34 lediglich auf Höhe entsprechend einem Schutz gegen Übergreifen. Vorzugsweise wird nur ein Arbeitsbereich 36 innerhalb des Sichtbereichs 20 überwacht, der hier beispielhaft einen Abstand von 300 mm zum Boden und eine Höhe von 2.000 mm aufweist. Der Abstand zum Boden soll verhindern, dass der Boden mit einem zu detektierenden Objekt 28 verwechselt wird, und darf zugleich nur so groß sein, dass ein Unterkriechen ausgeschlossen bleibt.

Eine Lücke 34 wird, wie beschrieben, als fiktives Objekt auf einer sicheren Höhe behandelt, und zwar samt den dahinterliegenden Sichtstrahlen beziehungsweise dessen projektivem Schatten 38. Das bedeutet aber, dass ein durch die Lücke 34 nicht erfasstes Objekt 28 am unteren Rand einen tatsächlichen Abstand 40 zu der Gefahrenstelle 26a aufweist, der deutlich größer wäre also der sicherheitstechnisch berücksichtigte Abstand 42 von der Lücke 34 zu der Gefahrenstelle 26a. In den dargestellten Verhältnissen mit einem Öffnungswinkel der Stereokamera 10 von etwa 70°, einem Objekt 28 in der linken unteren Ecke und einer Gefahrenstelle 26a in der rechten oberen Ecke ergibt sich eine erhebliche Überschätzung von 1,5 m, und eine noch größere Überschätzung ist vorstellbar.

Figur 5 zeigt in einer Darstellung ähnlich Figur 4 ein weiteres Beispiel, wie der kürzestes Abstand trotz der Behandlung von Lücken 34 als Objekte auf einer sicheren Höhe überschätzt wird. In diesem Fall befindet sich eine Person 28 im Sichtbereich 20, und der Abstand von deren Unterarm, der aufgrund der Lücke 34 nicht erfassbar ist, wird um etwa 0,5 m unterschätzt. Wenn die Lücke 34 sogar konservativ bis auf Höhe der Stereokamera 10 verschoben wird, verstärkt das die Unterschätzung noch weiter. Es sei nochmals darauf hingewiesen, dass die Gefahrenstelle 26a sich auch außerhalb des Arbeitsbereichs 36 oder des Sichtbereichs 20 befinden kann, auch dann kommt es zu möglicherweise sogar noch stärker unterschätzten kürzesten Abständen.

Um erfindungsgemäß zu einer geringeren Unterschätzung des kürzesten Abstands zu kommen, werden Objekte 28 zweifach mit unterschiedlichem Detektionsvermögen erfasst, und es wird jeweils ein kürzester Abstand der erfassten Objekte 28 zu der Gefahrenstelle 26a bestimmt. Der Sicherheitsbewertung wird dann der größere, günstigere Wert des kürzesten Abstands zu Grunde gelegt. Das wird nun im Einzelnen erläutert.

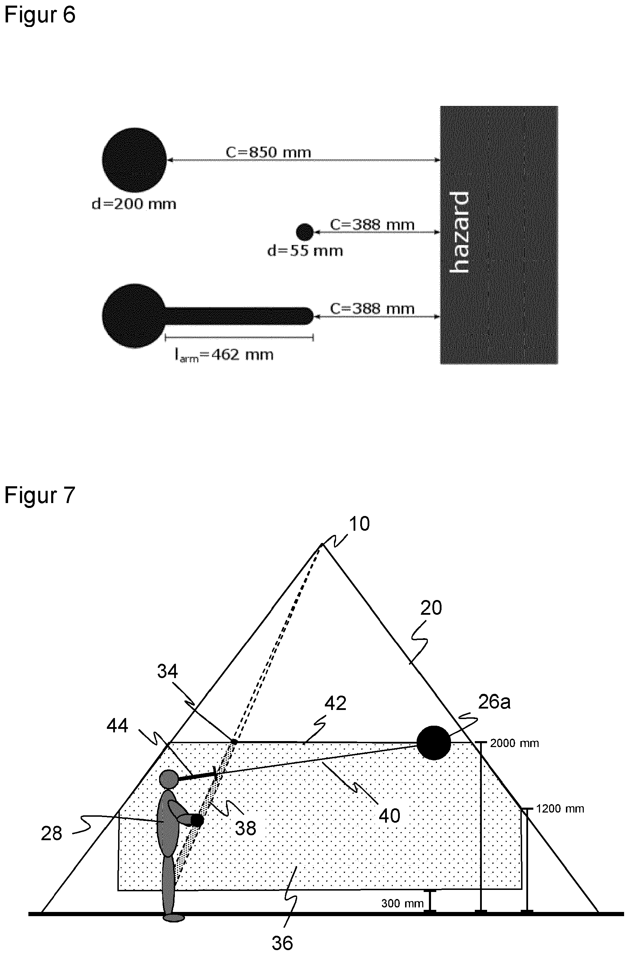

Figur 6 illustriert dazu auflösungsabhängige Anteile eines Sicherheitszuschlags bei verschiedenem Detektionsvermögen. Es wird darin rein beispielhaft ein Körperschutz mit d=200 mm und ein Armschutz mit d=55 mm angenommen.

Zunächst sei nochmals die Formel für den Sicherheitszuschlag bei der Bestimmung eines Sicherheitsabstands nach IEC 61496-4-3 oder DIN EN ISO 13855 wiedergegeben: $S_0 = (K \times T) + C + d$, mit Sicherheitsabstand $S_0$, Annäherungsgeschwindigkeit K, auflösungsabhängigem Zuschlag C und Detektionsvermögen d.

Der auflösungsabhängige Zuschlag C lässt sich anschaulich so verstehen, dass sich beispielsweise bei der Erkennung eines Körpers mit d=200 mm die Finger des mit diesem Detektionsvermögen nicht sicher erfassten Armes bereits um eine Armlänge um C=850 mm näher an der Gefahrenstelle 26a befinden könnten. Entsprechendes gilt bei Armschutz mit Detektionsvermögen d=55 mm für den Unterarm bei C=388 mm.

Um die mit unterschiedlichem Detektionsvermögen bestimmten kürzesten Abstände vergleichbar zu machen, wird bei der Körperdetektion ein Zuschlag vorgenommen, der sich als Differenz aus dem Wert des auflösungsabhängigen Zuschlags der beiden Detektionsvermögen zu $l_{arm}$ =850 mm - 388 mm=462 mm berechnet. Der Gedankengang ist ganz ähnlich wie bisher: an dem erfassten Körper könnte ein nicht erfasster Oberarm sich bereits um diese 462 mm näher an der Gefahrenstelle 26a befinden. Mit diesem Zuschlag $l_{arm}$ kann dann aber in den weiteren Auswertungen das kleinere C=388 mm des kleineren Detektionsvermögens für Armschutz verwendet werden.

Etwas allgemeiner gilt für ein anderes Detektionsvermögen als d=55 mm die Formel C=208 mm +12 mm (d-40). Bei einer besseren Auflösung mit d=40 mm und Unterarmdetektion würde sich dementsprechend C =208 mm ergeben, das die nicht erfasste Bewegung der Hand berücksichtigt. Der Zuschlag ergibt sich in diesem Fall zu dem Wert $l_{arm}$=850 mm - 208 mm=642 mm.

Ausgangspunkt ist, um im Beispiel von Arm- und Körperschutz zu bleiben, dass zu jeder Detektion mit Armauflösung auch eine Körperdetektion gehört. Die Körperdetektion an sich ist ausschlaggebend für die Personenerkennung und wird für die Abstandsberechnung verwendet wird. Die Armdetektion wird zusätzlich verwendet, um die Auflösung zu erhöhen und den maximalen Sicherheitszuschlag zu begrenzen, ohne dabei zu einer starken Unterschätzung durch Lücken 34 zu führen. Es werden dafür Berechnungen für zwei Detektionsvermögen ausgeführt. Beide führen zu validen, sicheren kürzesten Abständen. Dann wird situationsabhängig der jeweils günstigere, also größere Wert ausgewählt.

Figur 7 illustriert in einer Darstellung ähnlich Figur 4 und 5 das Ergebnis dieser robusten Abstandsberechnung. Es wird zum einen der kürzeste Abstand 42 zu der Gefahrenstelle 26a für alle mit Armauflösung erfassten Objekte berechnet. Im gezeigten Beispiel besteht dieser kürzeste Abstand 42 nicht zu einem realen Objekt 28, sondern zu einer Lücke 34, die als fiktives Objekt auf einer Höhe zum Schutz vor Hinübergreifen behandelt wird. Zum anderen wird der kürzeste Abstand 40 zu der Gefahrenstelle 26a für alle mit Körperauflösung erfassten Objekte 28 berechnet. Dabei wird der oben erläuterte Zuschlag 44 für $l_{arm}$ addiert. Lücken sind in dieser geringeren Auflösung seltener. Sie können analog zu der Lücke 34 behandelt werden, wobei hier vorzugsweise eine noch geringere Höhe von beispielsweise nur 1.200 mm möglich ist, weil für das Hinübergreifen mit dem Körper bereits mit einer geringeren Höhe ein Schutz gewährleistet ist. Wie bereits erwähnt, wäre in beiden Detektionsvermögen prinzipiell auch denkbar, Lücken auf eine Maximalhöhe bei der Stereokamera 10 zu betrachten, aber damit wird der kürzeste Abstand stärker überschätzt.

Für die weitere Sicherheitsbewertung gegenüber einem erforderlichen Mindestabstand, also beispielsweise zur Ausgabe an eine angeschlossene Sicherheitssteuerung oder Maschinen- beziehungsweise Robotersteuerung, wird das Maximum aus den beiden kürzesten Abständen gebildet. Die Sicherheitsbewertung erfolgt mit dem feineren auflösungsabhängigen Zuschlag, also beispielsweise nach Armauflösung mit C=388 mm. In dem gezeigten Beispiel ist trotz der Berücksichtigung von $l_{arm}$=462 mm der aus der Körperdetektion bestimmte kürzeste Abstand 40 weniger unterschätzt und daher günstiger. Dieser Fall ist durchaus praxisrelevant. Gründe dafür sind unter anderem, dass in der gröberen Auflösung der Körperdetektion weniger Lücken zu erwarten sind, und selbst wenn es Lücken gibt, sind die davon verdeckten Objekte meist näher an der Stereokamera 10, wie im Beispiel der Kopf. Zusätzlich können Lücken bei Körperdetektion noch als fiktive Objekte auf geringerer Höhe behandelt werden.

Hätte in diesem konkreten Beispiel die Stereokamera 10 die Person 28 vollständig erfasst, gäbe es also die Lücke 34 in den 3D-Bilddaten nicht, so wäre der reale Unterarm der Person 28 auch in der Objektdetektion mit Armauflösung anstelle der Lücke 38 das maßgebliche nächste Objekt und der kürzeste Abstand hierzu günstiger als derjenige aus der Körperdetektion. Das beschriebene Vorgehen deckt beide Fälle ab und wählt jeweils den vorteilhafteren kürzesten Abstand mit der besseren Verfügbarkeit des Systems. Effektiv wird die Unterschätzung bei Lücken auf $l_{arm}$=462 mm begrenzt, wobei einer Unterschätzung aufgrund von Lücken ausschließlich in einer Weise unterbunden wird, mit der die sicherheitsgerichtete Reaktion nicht negativ beeinflusst wird.

Die Figuren wurden jeweils am Beispiel von Arm- und Körperdetektion mit Zahlenwerten d=200 mm für Körperauflösung beschrieben. Für die Armauflösung wurden bereits mehrere Beispiele unter anderem bei d=40 mm und d=50 mm gegeben. Es kann zudem kontinuierlich für weitere Werte mit C=208 mm +12 mm (d-40) gerechnet werden, vgl. hierzu nochmals die einleitend genannte DGUV-Information FB HM-072. Auch für die Körperdetektion sind andere Zahlenwerte beispielsweise mit d=120 mm denkbar. Die Erläuterungen lassen sich ganz analog auf andere Relationen, wie etwa Hand- zu Armauflösung oder Finger- zu Handauflösung, aber auch in größeren Sprüngen wie Finger- zu Körperauflösung übertragen. Obwohl das Vorgehen an einer zweifachen Objekterkennung und Bestimmung kürzester Abstände beschrieben wurde, sind auch drei- oder mehrfache Objekterkennungen und Bestimmungen bei entsprechend unterschiedlichen Auflösungen beziehungsweise Detektionsvermögen vorstellbar.

Oben wurde schon kurz angesprochen, dass die Höhe, auf die Lücken verschoben werden, vom Detektionsvermögen abhängt. Es ist denkbar, diese Höhe für die einzelnen Detektionsvermögen unterschiedlich zu wählen, beispielsweise bei 2,00 m für Armschutz und bei 1,20 m für Körperschutz, da letzterer nicht frei schweben kann. Dadurch wird eine Unterschätzung des kürzesten Abstands weiter verringert.

In einer bevorzugten Ausführungsform wird das beschriebene Verfahren in einem zweikanaligen System beziehungsweise einer zweikanaligen Steuer- und Auswertungseinheit 24 implementiert. Dazu sind vorzugsweise redundante oder diversitär-redundante Hardwarebausteine für die jeweiligen Kanäle vorgesehen. Die Software kann für beide Kanäle dieselbe sein oder ebenfalls diversitär-redundant variieren, was bei unterschiedlicher Hardware fast zwangsläufig der Fall ist. Die jeweiligen Ergebnisse der Kanäle werden anschließend miteinander verglichen oder plausibilisiert. Eine besonders vorteilhafte Umsetzung führt nicht in jedem Kanal die Objekterkennung und Bestimmung kürzester Abstände für beide Detektionsvermögen aus, sondern jeder Kanal verwendet nur ein Detektionsvermögen. Die Zuständigkeit für ein Detektionsvermögen wird dann zwischen den Kanälen getauscht, sei es in einer zweiten Auswertung derselben 3D-Bilddaten oder einer späteren Auswertung anderer 3D-Bilddaten. Damit lässt sich die Auswertung noch effizienter ausführen. Es können sich zusätzliche Latenzen bis zur Aufdeckung eines Fehlers ergeben, die entweder tolerierbar sind oder durch sehr kurze Zyklen beim Tausch der Zuständigkeiten begrenzt werden.

**Patentansprüche**

1. Verfahren zur Absicherung mindestens einer Gefahrenstelle (26, 26a), bei dem 3D-Bilddaten eines Überwachungsbereichs (20, 36) zu der Gefahrenstelle (26, 26a) erfasst und die 3D-Bilddaten ausgewertet werden, um fein erfasste Objekte (28, 34) mit einer ersten Objekterkennung bei einem feinen Detektionsvermögen und grob erfasste Objekte (28) mit einer zweiten Objekterkennung bei einem groben Detektionsvermögen zu erkennen, wobei das Detektionsvermögen eine Mindestgröße festlegt, ab der Objekte (28) sicher erfasst werden und wobei der kürzeste Abstand (40, 42) zwischen den erfassten Objekten (28) und der Gefahrenstelle (26, 26a) bestimmt wird, und zwar nicht allein als physischer Abstand, sondern unter Berücksichtigung von Sicherheitszuschlägen, **dadurch gekennzeichnet, dass** ein erster kürzester Abstand (42) zwischen den fein erfassten Objekten (28, 34) und der Gefahrenstelle (26, 26a) und ein zweiter kürzester Abstand (40) zwischen den grob erfassten Objekten (28) und der Gefahrenstelle (26, 26a) bestimmt wird, dass für die Bestimmung des ersten kürzesten Abstands und des zweiten kürzesten Abstands unterschiedliche Sicherheitszuschläge in Abhängigkeit des Detektionsvermögens berücksichtigt werden, und dass der Absicherung als kürzester Abstand der größere Wert von erstem kürzestem Abstand (42) und zweitem kürzestem Abstand (40) zu Grunde gelegt wird.

2. Verfahren nach Anspruch 1,
wobei das feine Detektionsvermögen für Armschutz und das grobe Detektionsvermögen für Körperschutz ausgelegt ist, insbesondere bei 40 mm oder 55 mm für Armschutz und 120 mm oder 200 mm für Körperschutz.

3. Verfahren nach Anspruch 1 oder 2,
wobei zu dem zweiten kürzesten Abstand (40) die Differenz (44) eines auflösungsabhängigen Anteils eines Sicherheitszuschlags für beide Detektionsvermögen addiert wird, insbesondere 462 mm bei einem feinen Detektionsvermögen von 55 mm und einem groben Detektionsvermögen von 200 mm oder 642 mm bei einem feinen Detektionsvermögen von 40 mm und einem groben Detektionsvermögen von 200 mm.

4. Verfahren nach einem der vorhergehenden Ansprüche,
wobei bei der Auswertung des kürzesten Abstands ein auflösungsabhängiger Anteil eines Sicherheitszuschlags berücksichtigt wird, der dem feinen Detektionsvermögen entspricht, insbesondere nach der Formel 208 mm + 12 mm * (feines Detektionsvermögen - 40) und damit 388 mm bei einem feinen Detektionsvermögen von 55 mm oder 208 mm bei einem feinen Detektionsvermögen von 40 mm.

5. Verfahren nach einem der vorhergehenden Ansprüche,
wobei fein erfasste Objekte ignoriert werden, die nicht in einer Umgebung eines grob erfassten Objekts liegen oder damit verbunden sind.

6. Verfahren nach einem der vorhergehenden Ansprüche,
wobei Lücken (34) in den 3D-Bilddaten, d.h. sicherheitsrelevante Teilbereiche des Überwachungsbereichs (20, 36), in denen keine zuverlässige Höhe bestimmt werden kann, als Objekt auf einer vorgegebenen Höhe behandelt werden, die einer Höhe zum Absichern gegen Hinüberreichen entspricht.

7. Verfahren nach Anspruch 6,
wobei Lücken (34) bei der ersten Objekterkennung als Objekte in einer ersten Höhe und bei der zweiten Objekterkennung in einer zweiten Höhe behandelt werden, wobei die erste Höhe größer ist als die zweite Höhe, insbesondere die erste Höhe in einem Bereich [1,80 m; 2,40 m], [1,80 m; 2,20 m] oder in etwa bei 2,00 m und die zweite Höhe in einem Bereich [1,00 m; 1,60 m], [1,20 m; 1,40 m] oder in etwa bei 1,20 m liegt.

**8.** Verfahren nach einem der vorhergehenden Ansprüche,

wobei die Objekterkennung und/oder die Bestimmung von erstem kürzestem Abstand (42) und zweitem kürzestem Abstand (42) zweikanalig, insbesondere auf diversitär-redundanten Kanälen, auf dem einen Kanal für das feine Detektionsvermögen und auf dem anderen Kanal für das grobe Detektionsvermögen durchgeführt wird.

**9.** Verfahren nach Anspruch 8,

wobei die Zuständigkeit der Kanäle für ein Detektionsvermögen wechselt.

**10.** Verfahren nach einem der vorhergehenden Ansprüche,

wobei aufgrund des kürzesten Abstands entschieden wird, ob eine sicherheitsgerichtete Reaktion eingeleitet wird.

**11.** Verfahren nach einem der vorhergehenden Ansprüche,

wobei mehrere kürzeste Abstände zu mehreren Gefahrenstellen (26, 26a) bestimmt werden und ein kürzester Abstand als Minimum der mehreren kürzesten Abstände ermittelt wird.

**12.** Optoelektronischer Sensor (10), insbesondere 3D-Kamera, zur sicheren Erkennung von Objekten (28) einer durch ein Detektionsvermögen vorgegebenen Mindestgröße in einem Überwachungsbereich (20, 36), wobei der Sensor (10) mindestens einen Bildsensor (16a-b) zum Erfassen von 3D-Bilddaten des Überwachungsbereichs (20, 36) und eine Steuer- und Auswertungseinheit (24) aufweist, die für ein Verfahren nach einem der vorhergehenden Ansprüche ausgebildet ist.

**13.** Optoelektronischer Sensor (10) nach Anspruch 12, der einen sicheren Ausgang (30) aufweist, an dem der kürzeste Abstand zu mindestens einer Gefahrenstelle (26, 26a) und/oder die Position des Objekts (28, 34) in kürzestem Abstand zu mindestens einer Gefahrenstelle (26, 26a) ausgegeben wird.

**Claims**

**1.** A method for safeguarding at least one danger area (26, 26a), wherein 3D image data of a monitored area (20, 36) relating to the danger area (26, 26a) are detected and the 3D image data are evaluated in order to detect finely detected objects (28, 34) in a first object detection with a fine detection capability and coarsely detected objects (28) in a second object detection with a coarse detection capability, the detection capability defining a minimum size above which objects (28) are reliably detected, and wherein the shortest distance (40, 42) between the detected objects (28) and the danger area (26, 26a) is determined not only as a physical distance but taking into account safety margins, **characterized in that** a first shortest distance (42) between the finely detected objects (28, 34) and the danger area (26, 26a) and a second shortest distance (40) between the coarsely detected objects (28) and the danger area (26, 26a) are determined, **in that**, for determining the first shortest distance and the second shortest distance, different safety margins as a function of the detection capability are taken into account, and **in that** the greater value of the first shortest distance (42) and the second shortest distance (40) is taken as the basis for the safeguarding as the shortest distance.

**2.** The method according to claim 1,

wherein the fine detection capability is configured for arm protection and the coarse detection capability is configured for body protection, in particular at 40 mm or 55 mm for arm protection and 120 mm or 200 mm for body protection.

**3.** The method according to claim 1 or 2,

wherein the difference (44) of a resolution-dependent portion of a safety margin for both detection capabilities is added to the second shortest distance (40), in particular 462 mm in the case of a fine detection capability of 55 mm and a coarse detection capability of 200 mm or 642 mm in the case of a fine detection capability of 40 mm and a coarse detection capability of 200 mm.

**4.** The method according to any of the preceding claims,

wherein the evaluation of the shortest distance takes into account a resolution-dependent fraction of a safety margin which corresponds to the fine detection capability, in particular according to the formula 208 mm + 12 mm * (fine detection capability - 40) and thus 388 mm for a fine detection capability of 55 mm or 208 mm for a fine detection capability of 40 mm.

**5.** The method according to any of the preceding claims,

wherein finely detected objects that are not in a vicinity of or associated with a coarsely detected object are ignored.

**6.** The method according to any of the preceding claims,

wherein gaps (34) in the 3D image data, i.e. safety-relevant partial areas of the monitoring area (20, 36) in which no reliable height can be determined, are treated as an object at a predetermined height corresponding to a height for safeguarding against reaching over.

**7.** The method according to claim 6,
wherein gaps (34) are treated as objects at a first height in the first object recognition and at a second height in the second object recognition, the first height being greater than the second height, in particular the first height being in a range [1.80 m; 2.40 m], [1.80 m; 2.20 m] or approximately at 2.00 m and the second height being in a range [1.00 m; 1.60 m], [1.20 m; 1.40 m] or approximately at 1.20 m.

**8.** The method according to any of the preceding claims,
wherein the object detection and/or the determination of first shortest distance (42) and second shortest distance (42) is carried out in two channels, in particular on diverse-redundant channels, on one channel for the fine detection capability and on the other channel for the coarse detection capability.

**9.** The method according to claim 8,
wherein the responsibility of the channels for a detection capability changes.

**10.** The method according to any of the preceding claims,
wherein it is decided on the basis of the shortest distance whether a safety-related reaction is initiated.

**11.** The method according to any of the preceding claims,
wherein a plurality of shortest distances to a plurality of danger areas (26, 26a) are determined and a shortest distance is determined as a minimum of the plurality of shortest distances.

**12.** An optoelectronic sensor (10), in particular a 3D camera, for reliable detection of objects (28) of a minimum size predetermined by a detection capability in a monitoring area (20, 36), the sensor (10) comprising at least one image sensor (16a-b) for capturing 3D image data of the monitoring area (20, 36) and a control and evaluation unit (24) that is configured for a method according to any of the preceding claims.

**13.** An optoelectronic sensor (10) according to claim 12, comprising a safe output (30) at which the shortest distance to at least one danger area (26, 26a) and/or the position of the object (28, 34) at the shortest distance to at least one danger area (26, 26a) is output.

**Revendications**

**1.** Procédé de sécurisation d'au moins un emplacement de danger (26, 26a), dans lequel des données d'image 3D d'une zone à surveiller (20, 36) relative à l'emplacement de danger (26, 26a) sont saisies et les données d'image 3D sont évaluées, afin de reconnaître des objets détectés finement (28, 34) lors d'une première reconnaissance d'objet à capacité de détection fine et des objets détectés grossièrement (28) lors d'une deuxième reconnaissance d'objet à capacité de détection grossière, la capacité de détection définissant une taille minimale à partir de laquelle des objets (28) sont détectés de façon sûre, et la distance la plus courte (40, 42) entre les objets détectés (28) et l'emplacement de danger (26, 26a) étant déterminée, et ceci non seulement comme distance physique, mais en prenant en compte des suppléments de sécurité,
**caractérisé en ce que**
une première distance la plus courte (42) entre les objets détectés finement (28, 34) et l'emplacement de danger (26, 26a) et une deuxième distance la plus courte (40) entre les objets détectés grossièrement (28) et l'emplacement de danger (26, 26a) sont déterminées, **en ce que** pour déterminer la première distance la plus courte et la deuxième distance la plus courte, différents suppléments de sécurité sont pris en compte en fonction de la capacité de détection, et **en ce que** lors de la sécurisation, la plus grande valeur parmi la première distance la plus courte (42) et la deuxième distance la plus courte (40) est prise pour base en tant que distance la plus courte.

**2.** Procédé selon la revendication 1,
dans lequel la capacité de détection fine est conçue pour la protection des bras, et la capacité de détection grossière est conçue pour la protection du corps, en particulier à 40 mm ou 55 mm pour la protection des bras et à 120 mm ou 200 mm pour la protection du corps.

**3.** Procédé selon la revendication 1 ou 2,
dans lequel la différence (44) d'une part, dépendante de la résolution, d'un supplément de sécurité pour les deux capacités de détection est ajoutée à la deuxième distance la plus courte (40), en particulier 462 mm pour une capacité de détection fine de 55 mm et pour une capacité de détection grossière de 200 mm, ou 642 mm pour une capacité de détection fine de 40 mm et pour une capacité de détection grossière de 200 mm.

**4.** Procédé selon l'une des revendications précédentes,
dans lequel, lors de l'évaluation de la distance la plus courte, une part d'un supplément de sécurité, laquelle dépend de la résolution et correspond à la capacité de détection fine, est prise en compte, en particulier selon la formule 208 mm + 12 mm * (capacité de détection fine - 40), et donc 388 mm pour une capacité de détection fine de 55 mm, ou 208 mm pour une capacité de détection fine de 40 mm.

5. Procédé selon l'une des revendications précédentes,
dans lequel des objets détectés finement, qui ne sont pas situés dans un environnement d'un objet détecté grossièrement ou reliés à celui-ci, sont ignorés.

6. Procédé selon l'une des revendications précédentes,
dans lequel des lacunes (34) dans les données d'image 3D, c'est-à-dire des zones partielles de la zone à surveiller (20, 36) qui sont importantes pour la sécurité et dans lesquelles il n'est pas possible de déterminer une hauteur fiable, sont traitées comme un objet à une hauteur prédéfinie qui correspond à une hauteur pour la sécurisation à l'encontre d'une intervention depuis le côté.

7. Procédé selon la revendication 6,
dans lequel des lacunes (34) sont traitées comme des objets à une première hauteur lors de la première reconnaissance d'objet et à une deuxième hauteur lors de la deuxième reconnaissance d'objet, la première hauteur étant supérieure à la deuxième hauteur, en particulier la première hauteur étant située dans une plage de [1,80 m ; 2,40 m], [1,80 m ; 2,20 m] ou à peu près à 2,00 m, et la deuxième hauteur étant située dans une plage de [1,00 m ; 1,60 m], [1,20 m ; 1,40 m] ou à peu près à 1,20 m.

8. Procédé selon l'une des revendications précédentes,
dans lequel la reconnaissance d'objet et/ou la détermination de la première distance la plus courte (42) et de la deuxième distance la plus courte (42) est effectuée sur deux canaux, en particulier sur des canaux redondants diversitaires, sur un canal pour la capacité de détection fine et sur l'autre canal pour la capacité de détection grossière.

9. Procédé selon la revendication 8,
dans lequel la compétence des canaux pour une capacité de détection est alternée.

10. Procédé selon l'une des revendications précédentes,
dans lequel il est décidé, sur la base de la distance la plus courte, si une réaction de sécurité est déclenchée.

11. Procédé selon l'une des revendications précédentes,
dans lequel plusieurs distances les plus courtes par rapport à plusieurs emplacements de danger (26, 26a) sont déterminées, et une distance la plus courte est définie comme étant le minimum desdites plusieurs distances les plus courtes.

12. Capteur optoélectronique (10), en particulier caméra 3D, pour la reconnaissance sûre d'objets (28) d'une taille minimale prédéfinie par une capacité de détection dans une zone à surveiller (20, 36), le capteur (10) comprenant au moins un capteur d'images (16a-b) pour saisir des données d'image 3D de la zone à surveiller (20, 36) et une unité de commande et d'évaluation (24) qui est réalisée pour un procédé selon l'une des revendications précédentes.

13. Capteur optoélectronique (10) selon la revendication 12,
comprenant une sortie sécurisée (30) sur laquelle est délivrée la distance la plus courte par rapport à au moins un emplacement de danger (26, 26a) et/ou la position de l'objet (28, 34) à la distance la plus courte par rapport à au moins un emplacement de danger (26, 26a).

EP 3 893 145 B1

Figur 1

16

Figur 2

Figur 3

**Figur 4**

**Figur 5**

## Figur 6

C=850 mm

d=200 mm

C=388 mm

d=55 mm

C=388 mm

l_arm=462 mm

hazard

## Figur 7

10

20

34

42

26a

44

2000 mm

28

40

1200 mm

38

300 mm

36

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2275990 B1
- EP 2819109 A1
- US 7925077 B2
- EP 3200122 A1
- US 9094660 B2

- US 20150235351 A1
- EP 3578320 A1
- EP 3421189 B1
- EP 3421191 A1
- EP 3572971 A1

**In der Beschreibung aufgeführte Nicht-Patentliteratur**

- **B. FLÜGEL ; H. GREIL ; K. SOMMER.** Anthropologischer Atlas. Verlag Tribüne, 1986